# EUROPÄISCHE PATENTSCHRIFT

(11) **EP 0 640 183 B1**
(45) Veröffentlichungstag und Bekanntmachung des Hinweises auf die Patenterteilung: **13.03.1996**
(21) Anmeldenummer: 93909853.9
(22) Anmeldetag: 28.04.1993
(51) Int. Cl.: F04B 53/00, F04B 1/20, F16N 7/18, F04B 23/10

(54) **HYDROSTATISCHE MASCHINE MIT LECKÖLABFÜHRUNG**
HYDROSTATIC ENGINE WITH OIL LEAKAGE CHANNEL
MACHINE HYDROSTATIQUE AVEC EVACUATION DE L'HUILE DE FUITE

(30) Priorität: 14.05.1992 DE 4215869
(43) Veröffentlichungstag der Anmeldung: 01.03.1995
(73) Patentinhaber: BRUENINGHAUS HYDROMATIK GMBH, D-89275 Elchingen (DE)
(72) Erfinder: BECK, Jochen, D-Ulm (DE); HÖRMANN, Werner, D-7918 Illtertissen (DE)
(74) Vertreter: Körber, Wolfhart, Dr. rer.nat.
(86) Internationale Anmeldenummer: EP9301023
(87) Internationale Veröffentlichungsnummer: WO9323670

(56) Entgegenhaltungen:
- EP-A- 0 188 713
- DE-A- 3 638 890
- FR-A- 1 114 131
- FR-A- 2 145 741
- FR-A- 2 241 009
- GB-A- 588 614
- GB-A- 656 949
- US-A- 2 457 101

## Beschreibung

### Hydrostatische Maschine mit Leckölabführung

Die Erfindung betrifft eine hydrostatische Maschine, insbesondere eine Axialkolbenmaschine, mit einem Maschinengehäuse, dessen Gehäuse-Innenraum ein drehbar gelagertes Triebwerk aufnimmt und einen über wenigstens einen Leckölanschluß nach außen ausmündenden Leckölraum umfaßt, der Lecköl einschließlich Schmieröl, das von Lagerstellen der hydrostatischen Maschine abströmt, aufnimmt, und mit einer am Triebwerk drehfest angeordneten Pumpeinrichtung, die Lecköl durch den Leckölanschluß nach außen abpumpt, wobei sich ein bestimmtes Leckölniveau im unteren Bereich des Leckölraums einstellt.

Aus der FR-A 2 145 741 ist eine derartige hydrostatische Maschine bekannt, deren Pumpeinrichtung ein in das Lecköl eintauchendes Zahnrad und ein am Boden des Maschinengehäuses befestigtes Element mit einer Nut umfaßt, in die der in das Lecköl eintauchende Teil des Zahnrades mit geringem seitlichem Spiel eingreift. Der Nutboden verläuft konzentrisch zum Zahnrad und weist eine vertikale Stufe auf, die die Nut in zwei Nutabschnitte mit entsprechenden Nutbodenabschnitten teilt. Der dem Zahnrad-Austritt aus der Nut zugeordnete hintere Nutbodenabschnitt weist einen geringen und der verbleibende Nutbodenabschnitt einen größeren Abstand vom Außenumfang des Zahnrades auf. Am tiefsten Punkt des letzteren Nutbodenabschnitts befindet sich der Leckölanschluß. Das Zahnrad nimmt bei seiner Drehung Lecköl mit und fördert es in die Nut hinein. Der zwischen den Zähnen des Zahnrades und zwischen diesem und den Nutflanken befindliche Anteil dieses mitgenommenen Lecköls wird durch die gesamte Nut gefördert und tritt aus derselben am Zahnrad-Austritt aus. Die kinetische Energie des verbleibenden Anteils des mitgenommenen Lecköls wird durch dessen Aufprall auf die Stufe im Nutboden in Druckenergie umgewandelt, die eine Leckölströmung durch den Leckölanschluß hindurch verursacht. Auf diese Weise wird eine bestimmte Leckölmenge abgepumpt und ein entsprechendes Leckölniveau im Leckölraum eingestellt, wodurch die infolge der Drehung des Triebwerks einschließlich des Zahnrades im Lecköl hervorgerufenen Planschverluste so weit verringert werden, daß eine gewisse Menge Lecköl im Leckölraum zurückbleibt und vom Zahnrad unter Bildung eines Ölnebels verwirbelt wird, der die sich bewegenden Teile des Triebwerks schmiert. Das im Leckölraum eingestellte Leckölniveau hängt ab von der pro Zeiteinheit dem Leckölraum zuströmenden Leckölmenge, die ihrerseits von den Betriebsbedingungen der hydrostatischen Maschine, insbesondere von der Druckdifferenz an deren Leckspalten und deren Anschlüssen sowie von deren Drehzahl, abhängt, von der Drehzahl der hydrostatischen Maschine, d.h. von der vom Zahnrad in die Nut mitgenommenen Leckölmenge, und von den geometrischen Abmessungen des insbesondere hinteren Nutabschnitts relativ zum Zahnrad, d.h. von der aus der Nut austretenden Leckölmenge. Diese Abhängigkeiten sind sehr komplex und verhindern die Einstellung eines konstanten Leckölniveaus und damit eine konstante Verringerung der Planschverluste, die beispielsweise bei steigender Druckdifferenz und steigender Drehzahl der hydrostatischen Maschine ansteigen.

Es ist Aufgabe der Erfindung, eine hydrostatische Maschine der eingangs genannten Art so weiterzubilden, daß unabhängig von den Betriebsbedingungen ein konstantes Leckölniveau eingestellt wird und damit die Planschverluste auf einen konstanten Wert verringert oder vollständig vermieden werden.

Diese Aufgabe wird erfindungsgemäß durch die kennzeichnenden Merkmale des Anspruches 1 in Verbindung mit dessen gattungsbildenden Merkmalen gelöst. Die vom Leckölraum über den freien Rand der ringförmigen Begrenzung überlaufende Leckölmenge wird durch die Pumpeinrichtung aufgrund entsprechend hoher Förderleistung derselben unter sämtlichen Betriebsbedingungen, also druck- und drehzahlunabhängig, vollständig abgepumpt, so daß sich ein Leckölniveau einstellt, das der Höhe des freien Randes der ringförmigen Begrenzung entspricht. Mit anderen Worten, das Leckölniveau hängt lediglich von der Lage des freien Randes der ringförmigen Begrenzung ab; der Einfluß der Drehzahl der Pumpeinrichtung ist ausgeschaltet, da deren Förderleistung größer ist als die unter sämtlichen Betriebsbedingungen pro Zeiteinheit dem Leckölraum zuströmende Leckölmenge. Die Lage des freien Randes der ringförmigen Begrenzung ist so gewählt, daß entweder die die mechanischen Verluste der hydrostatischen Maschine übersteigenden Planschverluste oder sämtliche Planschverluste vermieden sind. Im letzteren Fall befindet sich das Leckölniveau vorzugsweise unterhalb des Triebwerks.

Aus der GB-A 656 949 ist eine Pumpeinrichtung bekannt, die in Form einer Radialbohrung in der Triebwelle einer Axialkolbenmaschine verläuft, die aber nicht zum Abpumpen von Lecköl aus dem Leckölraum geeignet ist. Eine Druckpumpe versorgt die Axialkolbenmaschine eingangsseitig mit unter Überdruck stehendem Öl. Dieser Überdruck herrscht über eine entsprechende Verbindung auch im Leckölraum der Axialkolbenmaschine, der über eine Drossel, eine Axial- und die die Pumpeinrichtung darstellende Radialbohrung in der Triebwelle an einen Schrägscheibenraum angeschlossen ist, der über einen Leckölanschluß nach außen ausmündet und in dem die Schrägscheibe und Rückführfedern zum Zurückführen der Kolben gegen den eingangsseitigen Überdruck angeordnet sind. Der Strömungsquerschnitt der Drossel ist so bemessen, daß sich auch bei Null-Förderstrom eine für die Schmierung der bewegten Teile im Schrägscheibenraum ausreichende Ölzirkulation ergibt, die durch die Zentrifugalwirkung unterstützt wird, welche die drehende Triebwelle auf das durch die Radialbohrung strömende und im Schrägscheibenraum über 360° verteilte Öl ausübt. Der Strömungsquerschnitt des Leckölanschlusses ist größer als derjenige der Drossel, so daß sich im Schrägscheibenraum ein geringerer Druck als im Leckölraum einstellt, der aufgabengemäß die Funktion der Rückführfedern im Schrägscheibenraum nicht beeinträchtigt. Dieser Druck im Schrägscheibenraum entspricht der Lagehöhe des Leckölanschlusses sowie dem Strömungswiderstand in der angeschlossenen Leckölleitung. Der Leckölraum und der Schrägscheibenraum dieser bekannten hydrostatischen Maschine sind demzufolge mit unter Überdruck stehendem Lecköl gefüllt, das Planschverluste bei Drehung des Triebwerks verursacht.

Weiterhin sind aus dem Stand der Technik, wie beispielsweise aus der FR-A 2 241 009, Pumpeinrichtungen im Gehäuse-Innenraum von hydrostatischen Axial- und Radialkolbenpumpen bekannt, die im Ansaugbereich derselben angeordnet sind und die Füllung der Zylinder durch Erhöhung des zugeführten Öldrucks verbessern.

Vorzugsweise ist die den Ansaugbereich der Pumpeinrichtung abteilende ringförmige Begrenzung eine Ringblende. Diese Ringblende kann eine von zwei im wesentlichen radial verlaufenden ringförmigen Begrenzungen sein, die beidseits der Pumpeinrichtung angeordnet sind und gemeinsam mit dem dazwischen befindlichen Abschnitt des Maschinengehäuses ein Pumpengehäuse bilden.

Zweckmäßigerweise ist die Pumpeinrichtung eine Zentrifugalpumpe, die ein Schaufelrad mit radial verlaufenden oder gekrümmten Schaufeln umfassen kann, die drehfest am Außenumfang des Triebwerks und/oder an einer freien Stirnseite desselben angeordnet sind.

Gemäß einer Weiterbildung der Erfindung ist die Pumpeinrichtung unter Bildung eines im Radialschnitt sichelförmigen Ringraums exzentrisch zum Maschinengehäuse angeordnet, wobei der Leckölanschluß im Ringraumbereich der größeren radialen Abmessung einmündet. Die Geschwindigkeitsenergie des aus dem Leckölraum angesaugten und in der Pumpeinrichtung beschleunigten Lecköls wird in dem als Diffusor wirkenden Ringraumbereich der größeren radialen Abmessung in Druck umgesetzt, um dadurch Strömungswiderstände in der an den Leckölanschluß angeschlossenen Leckölleitung und die Druckhöhe zum Tank zu überwinden. Zusätzlich oder alternativ zu diesem sichelförmigen Ringraum kann der Pumpeinrichtung eine Leitschaufelanordnung zugeordnet sein, die ebenfalls die Geschwindigkeitsenergie der Leckölströmung in der Pumpeinrichtung in Druck umsetzt.

Statt des Schaufelrades oder zusätzlich zu diesem kann die Pumpeinrichtung als Reibungspumpe ausgebildet sein, die einen sehr geringen konstruktiven Aufwand aufweist. Sie umfaßt vorzugsweise wenigstens eine mit dem Triebwerk umlaufende Pumpfläche, deren Pumpwirkung auf der Mitnahme der an ihr haftenden Reibungsschicht des abzupumpenden Lecköls beruht. Diese Pumpfläche kann eine am Triebwerk, beispielsweise an dessen Außenumfang, ausgebildete zylindrische Pumpfläche oder eine sich in einer zum Triebwerk senkrechten Radialebene, vorzugsweise an einer freien Triebwerks-Stirnseite, erstreckende ebene Pumpfläche sein. Zweckmäßigerweise ist jede Pumpfläche aufgerauht oder strukturiert, um die Förderleistung zu verbessern. Im Fall der Ausbildung der hydrostatischen Maschine als Axialkolbenmaschine in Schrägachsenbauweise ist die ebene Pumpfläche zweckmäßigerweise an einer freien Stirnseite einer Triebscheibe des Triebwerks ausgebildet. Hierbei ist der Leckölanschluß vorteilhafterweise mit axialem Abstand von der ebenen Pumpfläche in dem von der Triebscheibe überdeckten Bereich ausgebildet.

Weitere Vorteile und Merkmale der Erfindung ergeben sich aus den verbleibenden Patentansprüchen.

Nachstehend ist die Erfindung anhand einiger bevorzugter Ausführungsbeispiele unter Bezugnahme auf die Zeichnung näher beschrieben. Es zeigen:
- Fig. 1: einen Axialschnitt der hydrostatischen Maschine nach einem ersten bevorzugten Ausführungsbeispiel der Erfindung in schematischer Darstellung,
- Fig. 2: einen Schnitt entlang der Linie II-II in Figur 1,
- Fig. 3: ein Diagramm, das die im Betrieb auftretenden Verlustdrehmomente der in Fig. 1 und 2 gezeigten hydrostatischen Maschine in Abhängigkeit von dessen Drehzahl darstellt,
- Fig. 4: einen Axialschnitt der hydrostatischen Maschine nach einem zweiten bevorzugten Ausführungsbeispiel der Erfindung in schematischer Darstellung,
- Fig. 5: einen Schnitt entlang der Linie V-V in Fig. 4,
- Fig. 6: einen Schnitt entlang der Linie VI-VI in Fig. 4, und
- Fig. 7: einen Ausschnitt der hydrostatischen Maschine nach einem dritten bevorzugten Ausführungsbeispiel der Erfindung im Axialschnitt und in schematischer Darstellung.

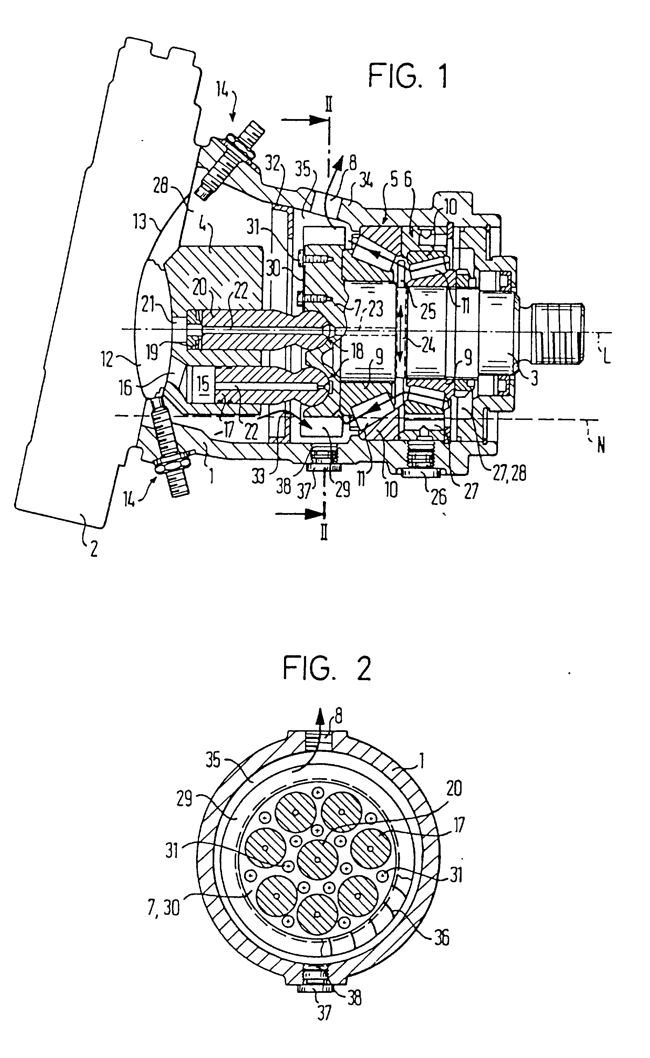

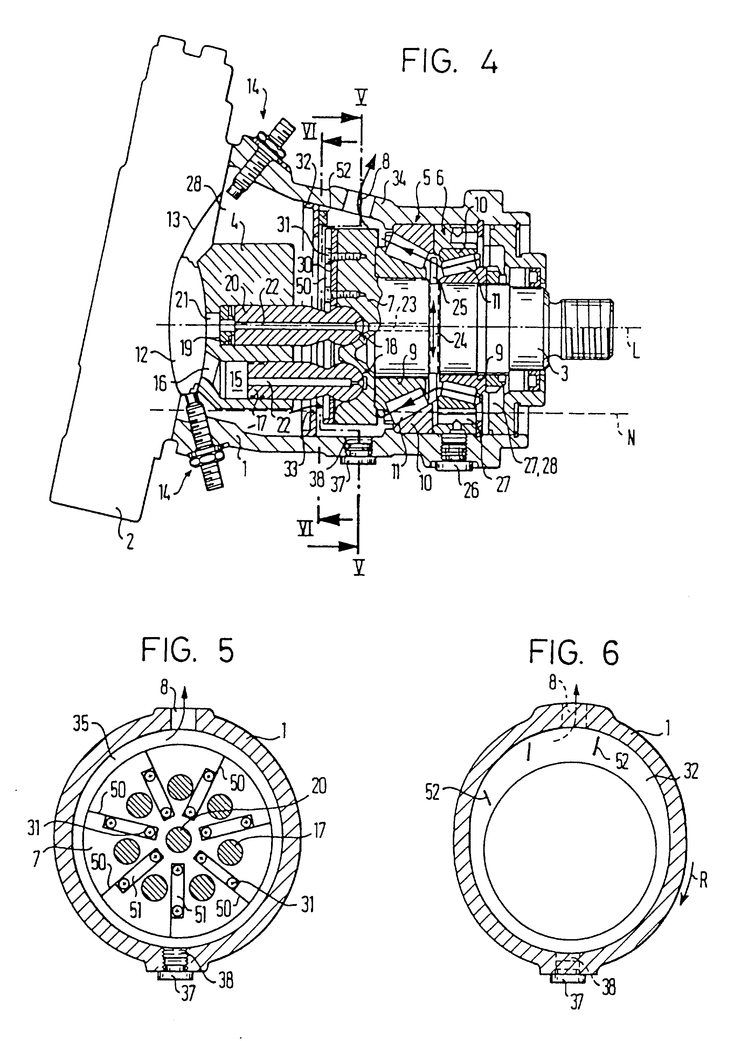

Die in den Fig. 1 und 4 dargestellte hydrostatische Maschine ist eine Axialkolbenmaschine in Schrägachsenbauweise von prinzipiell herkömmlicher Konstruktion. Sie ist für den horizontalen Einbau vorgesehen und umfaßt ein Maschinengehäuse 1 und ein in dessen Gehäuse-Innenraum drehbar angeordnetes Triebwerk, das erfindungsgemäß mit einer Pumpeinrichtung 29 bzw. 50 versehen ist.

Auf etwa halber Länge ist das ansonsten zylindrische Maschinengehäuse 1 einseitig derart erweitert, daß der in Figur 2 senkrecht verlaufende Radius der oberen Gehäusequerschnittshälfte bei konstantem Radius der unteren Gehäusequerschnittshälfte und entsprechenden Übergängen zwischen beiden Radien in Richtung einer stirnseitigen Abschlußplatte 2 stetig zunimmt. Auf diese Weise umfaßt das Maschinengehäuse 1 einen zylindrischen Gehäuseteil sowie einen im Querschnitt ellipsenförmigen Gehäuseteil.

Das Triebwerk umfaßt eine Triebwelle 3 und eine Zylindertrommel 4. Die Triebwelle 3 ist mittels zweier Kegelrollenlager 5,6 im zylindrischen Gehäuseteil drehbar gelagert und endet im Anfangsbereich des im Querschnitt ellipsenförmigen Gehäuseteils mit einem eine Triebscheibe 7 darstellenden flanschartigen Abschnitt größeren Durchmessers, dessen Rotationsebene durch einen Leckölanschluß 8 im Maschinengehäuse 1 in dessen in der Zeichnung oberen Scheitelpunktbereich geht. Vom Leckölanschluß 8 führt eine nicht dargestellte Leckölleitung zum ebenfalls nicht dargestellten Tank. Die Triebscheibe 7 ist in unmittelbarer Nähe des Kegelrollenlagers 5 angeordnet. Jedes Kegelrollenlager 5,6 besteht aus einem an der Triebwelle 3 befestigten Innenring 9, einem am Maschinengehäuse 1 befestigten Außenring 10 und dazwischen befindlichen Kegelrollen 11.

Die Zylindertrommel 4 ist in den im Querschnitt ellipsenförmigen Teil des Maschinengehäuses 1 auf einem Steuerkörper 12 drehbar gelagert. Diese Lagerung ist selbstzentrierend; zu diesem Zweck sind die Lagerflächen der Zylindertrommel 4 und des Steuerkörpers 12, wie z.B. in Figur 1 gezeigt, mit konkavem bzw. konvexem Verlauf sphärisch ausgebildet. Der Steuerkörper 12 ist in einem kreisbahnförmigen Stütz- und Schwenklager 13 in der Abschlußplatte 2 verschiebbar angeordnet und kann innerhalb dieses Lagers mittels einer Stelleinrichtung 14 in jeder gewünschten Stellung fixiert werden. Im Steuerkörper 12 sind in bekannter Weise zwei einander gegenüberliegende, nicht gezeigte Steuernieren ausgebildet, die mit einem Druckstutzen und einem Saugstutzen (ebenfalls nicht gezeigt) der Axialkolbenmaschine verbunden sind.

In der Zylindertrommel 4 sind in bekannter Weise axial verlaufende und gleichmäßig auf einem Teilkreis verteilte Zylinderräume 15 ausgebildet, die über Zylinderkanäle 16 an der sich am Steuerkörper 12 abstützenden Lagerfläche der Zylindertrommel 4 ausmünden und bei Drehung der letzteren die Zylinderräume 15 mit dem Druck- und dem Saugstutzen verbinden. In den Zylinderräumen 15 sind Kolben 17 hin- und herbewegbar angeordnet. Ihre Kolbenstangen sind über Kugelgelenke 18 drehmitnehmbar mit der Triebscheibe 7 verbunden.

In einer zentralen Sackbohrung in der Zylindertrommel 4 sitzt eine Druckfeder 19, die sich gegen einen ebenfalls mittels eines Kugelgelenkes 18 mit der Triebscheibe 7 verbundenen, in die Sackbohrung hineinragenden Mittelzapfen 20 abstützt und auf diese Weise die Zylindertrommel 4, wenn keine Öldruckkräfte auftreten, in Anlage an den Steuerkörper 12 hält.

Die Sackbohrung mündet über einen Ölkanal 21 an der Lagerfläche der Zylindertrommel 4 aus. Dieser Ölkanal 21 versorgt über eine axiale Durchgangsbohrung 22 im Mittel zapfen 20, eine weiterführende Axialbohrung 23 in der Triebwelle 3, eine in derselben in einer Radialebene zwischen beiden Kegelrollenlagern 5,6 ausgebildete Umfangsnut 24 und Radialbohrungen 25 in der gleichen Radialebene beide Kegelrollenlager 5,6 zwecks Schmierung mit Drucköl aus dem internen Ölkreislauf der Axialkolbenmaschine. Die Ölversorgung der Kugelgelenke 18 erfolgt ebenfalls aus dem internen Ölkreislauf über die Durchgangsbohrung 22 im Mittel zapfen 20 sowie über im wesentlichen gleichartige, ebenfalls mit dem Bezugszeichen 22 bezeichnete, axiale Durchgangsbohrungen in den Kolben 17.

Ein Spülölanschluß 26 im zylindrischen Gehäuseteil des Maschinengehäuses 1 ist zwecks zusätzlicher Schmierölversorgung der Kegelrollenlager 5,6 über eine Ringkanalanordnung 27 mit den Radialbohrungen 25 und der der Triebscheibe 7 abgewandten Seite des Kegelrollenlagers 6 verbunden.

Der vom Triebwerk 3,4,7 nicht ausgefüllte Teil des Gehäuse-Innenraums dient als Leckölraum 28 zur Aufnahme des bei Betrieb der Axialkolbenmaschine anfallenden Lecköls. Der Leckölraum 28 ist über den Leckölanschluß 8 und eine nicht gezeigte, weiterführende Leckölleitung mit dem ebenfalls nicht gezeigten Tank verbunden. An der in eingebauter Lage höchsten Stelle weist das Maschinengehäuse 1 einen nicht gezeigten Entlüftungsanschluß auf, der über eine ebenfalls nicht gezeigte Entlüftungsleitung bis zu einem Entlüftungsventil (nicht gezeigt) führt.

Die in den Fig. 1 und 2 dargestellte Pumpeinrichtung 29 ist eine Strömungspumpe in Form eines Schaufelrades 29 mit gekrümmten Schaufeln 36, das am Umfang der Triebscheibe 7 angebracht ist und einen sich radial erstreckenden Befestigungsflansch 30 aufweist, über den es mittels Schrauben 31 an der freien Stirnseite der Triebscheibe 7 befestigt ist. Beidseits des Schaufelrades 29 sind am Maschinengehäuse 1 je eine radial verlaufende Begrenzung befestigt. Eine der Begrenzungen ist vom Außenring 10 und den Kegelrollen 11 des der Triebscheibe 7 benachbarten Kegelrollenlagers 5 und die andere Begrenzung von einer Ringblende 32 gebildet, die im Bereich zwischen der Zylindertrommel 4 und der Triebscheibe 7 angeordnet ist und im Abstand von der gedachten, die Gesamtheit der aus der Zylindertrommel 4 herausragenden Kolbenstangen umschreibenden Zylinderfläche endet. Der diesem Abstand entsprechende Ringspalt ist mit dem Bezugszeichen 33 bezeichnet.

Beide Begrenzungen 10,11 und 32 sowie der zwischen diesen befindliche Abschnitt 34 des Maschinengehäuses 1 bilden innerhalb des Leckölraums 28 ein Pumpengehäuse für das Schaufelrad 29.

Zwischen dem Abschnitt 34 des Maschinengehäuses 1 und dem Schaufelrad 29 befindet sich ein Ringraum 35, der aufgrund des zur Längsachse L der Axialkolbenmaschine bzw. des Triebwerks 3,4,7 schrägen Verlaufs des Maschinengehäuse-Abschnitts 34 im Radialschnitt sichelförmig ausgebildet ist und in dessen Ringraumbereich größter radialer Abmessung der Leckölanschluß 8 einmündet (siehe Fig. 2). Die Leckölzuströmung zum Schaufelrad 29 erfolgt in axialer Richtung zum einen über das Kegelrollenlager 5 im wesentlichen auf dessen Gesamtumfang und zum anderen über den Ringspalt 33. Im unteren Scheitelpunktbereich ist diametral zum Leckölanschluß 8 eine durch eine Verschlußschraube 37 verschlossene Gehäuseöffnung 38 im Maschinengehäuse 1 ausgebildet.

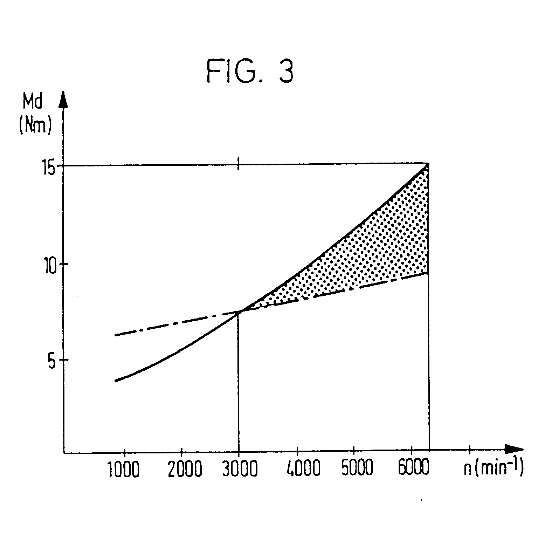

Da die Funktion der dargestellten hydrostatischen Maschine dem Fachmann bekannt ist und sich deshalb eine Beschreibung derselben erübrigt, ist nachstehend lediglich die Funktion der Pumpeinrichtung 29 nach den Fig. 1 und 2 erläutert. Sobald die hydrostatische Maschine angetrieben wird und sich das Triebwerk 3,4,7 dreht, entstehen Verluste, die mit zunehmender Drehzahl ansteigen und einen sogen. Planschverlustanteil enthalten, der durch die Drehung des Triebwerks in dem innerhalb des Leckölraums 28 befindlichen Lecköl hervorgerufen wird und in Figur 3 mit der durchgezogenen Linie dargestellt ist. Figur 3 zeigt weiterhin mit der strichpunktierten Linie die Abhängigkeit des verbleibenden, vorwiegend mechanischen Verlustanteils, der bei Drehung des Triebwerks im leckölfreien Leckölraum 28 auftreten würde. Es ist zu erkennen, daß im unteren Drehzahlbereich bis 3000 min⁻¹ (etwa die Hälfte der maximal zulässigen Drehzahl von 6300 min⁻¹) der Planschverlustanteil kleiner und im oberen Drehzahlbereich oberhalb 3000 min⁻¹ größer als der verbleibende Verlustanteil ist.

Während der Drehung des Triebwerks 3,4,7 tritt aus dem internen Ölkreislauf der hydrostatischen Maschine Lecköl vorwiegend über die Kugelgelenke 18 und über das von den Lagerflächen der Zylindertrommel 4 und des Steuerkörpers 12 gebildete Lager in den Leckölraum 28 ein und strömt von diesem über die Ringblende 33 axial dem Schaufelrad 29 zu. Das ebenfalls aus dem internen Ölkreislauf und gegebenenfalls vom Spülölanschluß 26 den Kegelrollenlagern 5,6 zugeführte Öl strömt ebenfalls axial über das Kegelrollenlager 5 dem Schaufelrad 29 zu. Das gesamte zuströmende Öl wird innerhalb des als Zentrifugalpumpe wirkenden Schaufelrades 29 radial von innen nach außen geführt und entsprechend der Drehung des Schaufelrades 29 beschleunigt. Die dabei dem Öl zugeführte Geschwindigkeitsenergie wird im Ringraum 35, insbesondere in dessen Bereich größter radialer Abmessung, in Druck umgesetzt. Sobald der Druck ausreichend hoch ist, um die Reibungsverluste in der bis zum Tank führenden Leckölleitung sowie die Druckhöhe bis zum Tank, falls dieser in einer Ebene oberhalb der hydrostatischen Maschine angeordnet ist, zu überwinden, wird das Lecköl über den Leckölanschluß 8 abgepumpt.

Dabei sind das Schaufelrad 29 und der Ringraum 35 so ausgelegt, daß das Abpumpen des Lecköls bei einer Drehzahl des Triebwerks und damit des Schaufelrades 29 von n = 3000 min⁻¹ beginnt und die Förderleistung des Schaufelrades 29 im Drehzahlbereich oberhalb dieser 3000 min⁻¹ größer ist als die pro Zeiteinheit in den Leckölraum 28 eintretende Leckölmenge sowie gegebenenfalls über den Spülölanschluß 26 zusätzlich zugeführte Schmierölmenge.

Aufgrund dieser Förderleistung des Schaufelrades 29 und des horizontalen Einbaus der hydrostatischen Maschine wird das über den Ringspalt 33 zuströmende Lecköl durch das Schaufelrad 29 in den unteren Scheitelpunktbereich des Ringraums 35, d.h. in dessen Bereich kleinster radialer Abmessung, eingesaugt und, wie oben beschrieben, abgepumpt. Sobald das Leckölniveau bis unter die Ringblende 32 in deren Bereich kleinster radialer Abmessung abgesunken ist, wird lediglich das aus dem Kegelrollenlager 5 austretende Öl abgepumpt, während gleichzeitig in den Leckölraum 28 nachströmendes Lecköl das Leckölniveau ansteigen läßt. Sobald dieses den Ringspalt 33 in dessen unteren Scheitelpunktbereich erreicht, wird Lecköl erneut vom Schaufelrad 29 angesaugt und abgepumpt. Folglich stellt sich ein mit dem Bezugszeichen N bezeichnetes Leckölniveau im unteren Scheitelpunktbereich des Ringspaltes 33 unterhalb des Triebwerks 3,4,7 ein. Auf diese Weise wird der gesamte, in Fig. 3 durch den schwarz angelegten Bereich zwischen der durchgezogenen und der strichpunktierten Linie rechts des Schnittpunktes dieser beiden Linien dargestellte Planschverlustanteil vermieden. Dies gilt für den gesamten Drehzahlbereich oberhalb 3000 min⁻¹, da mit steigender Drehzahl die Förderleistung des Schaufelrades 29 im gleichen Maße wie die anfallende Leckölmenge einschließlich der gegebenenfalls über den Spülölanschluß 26 zugeführten Schmierölmenge ansteigt.

Die in den Figuren 4 bis 6 dargestellte Pumpeinrichtung 50 ist ebenfalls eine als Zentrifugalpumpe wirkende Strömungspumpe mit radial verlaufenden Schaufeln 50, die entweder zu einem Schaufelrad zusammengesetzt sein können oder, wie hier dargestellt, jeweils einteilig mit einem senkrecht abstehenden Befestigungsblech 51 ausgebildet und über dieses mittels Befestigungsschrauben 31 an der freien, der Zylindertrommel 4 zugewandten Stirnseite der Triebscheibe 7 befestigt sind. Dieser Pumpeinrichtung 50, die die gleiche Funktion wie diejenige nach den Fig. 1 und 2 aufweist, ist eine Leitschaufelanordnung mit (in diesem Ausführungsbeispiel) drei ortsfesten Leitschaufeln 52 zugeordnet, die im Bereich des Leckölanschlusses 8 in die Ringblende 32 eingesetzt sind (siehe Figur 6). Zwei dieser Leitschaufeln 52 sind in Drehrichtung R des Triebwerks 3,4,7 vor dem Leckölanschluß 8 mit einem in Drehrichtung R schrägen Verlauf angeordnet, während die verbleibende Leitschaufel sich unmittelbar hinter dem Leckölanschluß 8 befindet und einen radialen Verlauf aufweist. Die Leitschaufelanordnung 52 hat im wesentlichen die gleiche Aufgabe der Druckumsetzung wie der Bereich größter radialer Abmessung des sichelförmigen Ringraumes 35 nach den Figuren 1 und 2 und kann folglich statt in einem solchen sichelförmigen Ringraum 35, wie in den Figuren 5 und 6 dargestellt, auch in einem Ringraum konstanter Ringbreite angeordnet sein. In der Praxis werden die Leitschaufeln 52 ebenso wie die Schaufeln 36,50 hinsichtlich ihrer Anzahl, Größe, Ausbildung und ihres Verlaufs zwecks Optimierung ihrer Funktion an die unterschiedlichen Einsatzbedingungen angepaßt.

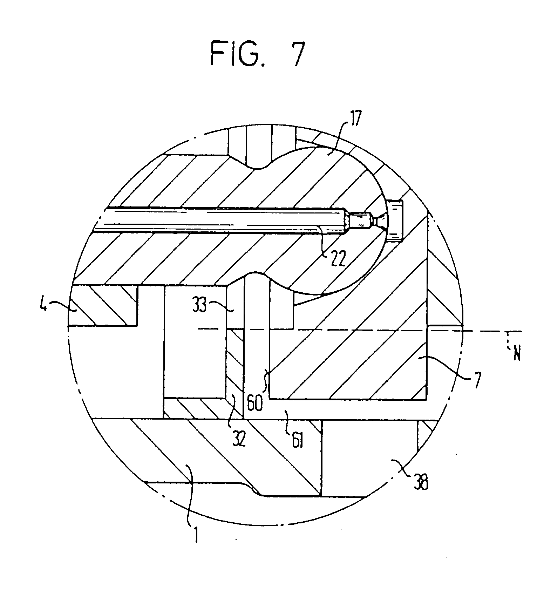

Die in Figur 7 im Ausschnitt dargestellte Axialkolbenmaschine unterscheidet sich bei ansonsten gleicher Konstruktion und Funktion von derjenigen nach Figur 1 durch eine als Reibungspumpe ausgebildete Pumpeinrichtung 60, einen durch entsprechende Anpassung des Maschinengehäuses 1 entstandenen Ringraum 61 konstanter Ringbreite und einen im unteren Scheitelpunktbereich des Maschinengehäuses 1 mit axialem Abstand von der freien Stirnseite der Triebscheibe 7 in dem von dieser überdeckten Bereich ausgebildeten Leckölanschluß, nämlich die Gehäuseöffnung 38. Die Reibungspumpe besteht aus einer Pumpfläche 60 in Form eines ringförmigen Flächenabschnitts der freien Stirnseite der Triebscheibe 7 in deren radialen Randbereich. Die Pumpwirkung dieser Reibungspumpe beruht auf der Mitnahme der an ihrer Pumpfläche 60 haftenden Reibungsschicht des abzupumpenden Lecköls, welches bei entsprechender Drehzahl des Triebwerks 3,4,7 radial nach außen beschleunigt und in gleicher Weise wie bei der Strömungspumpe 29 über den Ringraum 61 und über den Leckölanschluß 38 (oder jede andere Gehäuseöffnung) nach außen abgepumpt wird. Um eine Druckumsetzung zu erzielen, ist die (radiale) Ringbreite des Ringraums 61 größer als die Dicke der Reibungsschicht. Selbstverständlich kann auch eine Leitschaufelanordnung eingesetzt und/oder der Ringraum 35 sowie der Leckölanschluß 8 nach Fig. 1 verwendet werden. Um die Haftung der Reibungsschicht zu erhöhen, ist die Pumpfläche 60 strukturiert, beispielsweise aufgerauht. Ihr Abstand zur Ringblende 32 ist größer als die Dicke der Reibungsschicht.

## Patentansprüche

1. Hydrostatische Maschine, insbesondere Axialkolbenmaschine, mit einem Maschinengehäuse, dessen Gehäuse-Innenraum ein drehbar gelagertes Triebwerk aufnimmt und einen über wenigstens einen Leckölanschluß nach außen ausmündenden Leckölraum umfaßt, der Lecköl einschließlich Schmieröl, das von Lagerstellen der hydrostatischen Maschine abströmt, aufnimmt, und mit einer am Triebwerk drehfest angeordneten Pumpeinrichtung, die Lecköl durch den Leckölanschluß nach außen abpumpt, wobei sich ein bestimmtes Leckölniveau im unteren Bereich des Leckölraums einstellt
**gekennzeichnet** durch eine ringförmige Begrenzung (32), die einen axialen Ansaugbereich der Pumpeinrichtung (29; 50; 60) im unteren Bereich des Leckölraums (28) abteilt, am Maschinengehäuse (1) befestigt ist und im Abstand von diesem mit einem freien Rand endet, der als Überlauf für Lecköl aus dem Leckölraum (28) zum Ansaugbereich dient und das Niveau (N) des Lecköls im Leckölraum (28) bestimmt, bei welchem Niveau (N) zumindest keine die mechanischen Verluste der hydrostatischen Maschine übersteigenden Planschverluste infolge der Drehung des Triebwerks (3,4,7) im Lecköl auftreten.

2. Hydrostatische Maschine nach Anspruch 1,
**dadurch gekennzeichnet**,
daß sich das Niveau (N) unterhalb des Triebwerks (3,4,7) befindet.

3. Hydrostatische Maschine nach Anspruch 1 oder 2,
**dadurch gekennzeichnet**,
daß die Pumpeinrichtung eine Strömungspumpe (29; 50; 60) umfaßt.

4. Hydrostatische Maschine nach Anspruch 3,
**dadurch gekennzeichnet**,
daß die Pumpeinrichtung eine Zentrifugalpumpe (29; 50; 60) umfaßt.

5. Hydrostatische Maschine nach Anspruch 3 oder 4,
**dadurch gekennzeichnet**,
daß die Pumpeinrichtung ein Schaufelrad (29; 50) umfaßt.

6. Hydrostatische Maschine nach Anspruch 5,
**dadurch gekennzeichnet**,
daß die Pumpeinrichtung (29) drehfest am Außenumfang des Triebwerks (3,4,7) angeordnete Schaufeln (36) umfaßt.

7. Hydrostatische Maschine nach Anspruch 5 oder 6,
**dadurch gekennzeichnet**,
daß die Pumpeinrichtung (50) drehfest an einer freien Stirnseite des Triebwerks (3,4,7) angeordnete Schaufeln (50) umfaßt.

8. Hydrostatische Maschine nach wenigstens einem vorhergehenden Anspruch,
**dadurch gekennzeichnet**,
daß die Pumpeinrichtung eine Reibungspumpe (60) mit wenigstens einer mit dem Triebwerk (3,4,7) umlaufenden Pumpfläche (60) umfaßt, deren Pumpwirkung auf der Mitnahme der an ihr haftenden Reibungsschicht des abzupumpenden Lecköls beruht, und daß der Leckölanschluß (38) im Bereich der Pumpfläche (60) ausgebildet ist.

9. Hydrostatische Maschine nach Anspruch 8,
**dadurch gekennzeichnet**,
daß die Pumpfläche eine am Triebwerk (3,4,7) ausgebildete zylindrische Pumpfläche ist.

10. Hydrostatische Maschine nach Anspruch 8,
**dadurch gekennzeichnet**,
daß die Pumpfläche eine sich in einer zum Triebwerk (3,4,7) senkrechten Radialebene erstreckende ebene Pumpfläche (60) ist.

11. Hydrostatische Maschine nach Anspruch 10,
**dadurch gekennzeichnet**,
daß die ebene Pumpfläche (60) an einer freien Stirnseite des Triebwerks (3,4,7) ausgebildet ist.

12. Hydrostatische Maschine nach Anspruch 11, die als Schrägachsenmaschine mit einer Triebscheibe ausgebildet ist,
**dadurch gekennzeichnet**,
daß die ebene Pumpfläche (60) an einer freien Stirnseite der Triebscheibe (7) ausgebildet ist.

13. Hydrostatische Maschine nach Anspruch 12,
**dadurch gekennzeichnet**,
daß der Leckölanschluß (38) mit axialem Abstand von der ebenen Pumpfläche (60) in dem von der Triebscheibe (7) überdeckten Bereich ausgebildet ist.

14. Hydrostatische Maschine nach wenigstens einem der Ansprüche 8 bis 13,
**dadurch gekennzeichnet**,
daß jede Pumpfläche (60) strukturiert, z.B. aufgerauht, ist.

15. Hydrostatische Maschine nach wenigstens einem vorhergehenden Anspruch,
**dadurch gekennzeichnet**,
daß die Begrenzung (32) als Ringblende ausgebildet und eine von zwei im wesentlichen radial verlaufenden ringförmigen Begrenzungen (10, 11; 32) ist, die beidseits der Pumpeinrichtung (29; 50; 60) angeordnet sind und gemeinsam mit dem dazwischen befindlichen Abschnitt des Maschinengehäuses (1) ein Pumpengehäuse (10, 11; 32, 34)bilden.

16. Hydrostatische Maschine nach wenigstens einem vorhergehenden Anspruch,
**dadurch gekennzeichnet**,
daß die Pumpeinrichtung (29; 50) unter Bildung eines im Radialschnitt sichelförmigen Ringraums (35) exzentrisch zum Maschinengehäuse (1) angeordnet ist, und daß der Leckölanschluß (8) im Ringraumbereich (35) der größeren radialen Abmessung einmündet.

17. Hydrostatische Maschine nach wenigstens einem vorhergehenden Anspruch,
**dadurch gekennzeichnet**,
daß der Pumpeinrichtung (50) eine Leitschaufelanordnung (52) zugeordnet ist.

18. Hydrostatische Maschine nach wenigstens einem vorhergehenden Anspruch,
dadurch gekennzeichnet,
daß der Leckölanschluß (8) im eingebauten Zustand der hydrostatischen Maschine im oberen Scheitelpunktbereich des Maschinengehäuses (1) angeordnet ist.

## Claims

1. Hydrostatic machine, in particular axial piston machine, having a machine housing the internal housing chamber of which accommodates a rotatably mounted drive mechanism and has a leakage oil chamber opening to the outside via at least one leakage oil connection and which takes up leakage oil, including lubricating oil which flows from bearing points of the hydrostatic machine, and having a pump device arranged rotationally fixed to the drive mechanism, which pump device pumps the leakage oil off to the outside through the leakage oil connection, whereby a particular leakage oil level is established in the lower region of the leakage oil chamber,
characterised by an annular limiting means (32) which divides an axial suction region of the pump device (29; 50; 60) in the lower region of the leakage oil chamber (28), which is attached to the machine housing (1) and terminates with a free edge at a spacing therefrom, which edge serves as an overflow for leakage oil out of the leakage oil chamber (28) to the suction region and determines the level (N) of the leakage oil in the leakage oil chamber (28), at which level (N) splash losses consequent upon the rotation of the drive mechanism (3, 4, 7) in the leakage oil - or at least splash losses which exceed the mechanical losses of the hydrostatic machine - do not occur.

2. Hydrostatic machine according to claim 1,
characterised in that,
the level (N) is below the drive mechanism (3, 4, 7).

3. Hydrostatic machine according to claim 1 or 2,
characterised in that,
the pump device comprises a turbo pump (29; 50; 60).

4. Hydrostatic machine according to claim 3,
characterised in that,
the pump device comprises a centrifugal pump (29; 50; 60).

5. Hydrostatic machine according to claim 3 or 4,
characterised in that,
the pump device comprises an impeller (29; 50).

6. Hydrostatic machine according to claim 5,
characterised in that,
the pump device (29) comprises vanes (36) arranged fixed on the external circumference of the drive mechanism (3, 4, 7), so as to rotate therewith.

7. Hydrostatic machine according to claim 5 or 6,
characterised in that,
the pump device (50) comprises vanes (50) arranged fixed on a free end face of the drive mechanism (3, 4, 7), so as to rotate therewith.

8. Hydrostatic machine according to any preceding claim,
characterised in that,
the pump device comprises a friction pump (60) having at least one pump surface (60) rotating with the drive mechanism (3, 4, 7), the pump effect of which is based on the carrying along of the thereto adhering frictional layer of oil to be pumped away, and in that the leakage oil connection (38) is formed in the region of the pump surface (60).

9. Hydrostatic machine according to claim 8,
characterised in that,
the pump surface is a cylindrical pump surface formed on the drive mechanism (3, 4, 7).

10. Hydrostatic machine according to claim 8,
characterised in that,
the pump surface is a flat pump surface (60) extending in a radial plane perpendicular to the drive mechanism (3, 4, 7).

11. Hydrostatic machine according to claim 10,
characterised in that,
the flat pump surface (60) is formed on a free end face of the drive mechanism (3, 4, 7).

12. Hydrostatic machine according to claim 11, which is formed as bent axis machine with a drive disk,
characterised in that,
the flat pump surface (60) is formed on a free end face of the drive disk (7).

13. Hydrostatic machine according to claim 12,
characterised in that,
the leakage oil connection (38) is formed at an axial spacing from the flat pump surface (60) in the region covered by the drive disk (7).

14. Hydrostatic machine according to any of claims 8 to 13,
characterised in that,
each pump surface (60) is textured, e.g. roughened.

15. Hydrostatic machine according to any preceding claim,
characterised in that,
the limiting means (32) is formed as an annular plate and is one of two substantially radially developing annular limiting means (10, 11; 32) arranged to both sides of the pump device (29; 50; 60) and which form, together with the section (34) of the machine housing (1) located therebetween, a pump housing (10, 11; 32, 34).

16. Hydrostatic machine according to any preceding claim,
characterised in that,
the pump device (29; 50) is arranged eccentrically of the machine housing (1) forming an annular chamber (35) which is sickle shaped in radial section, and in that the leakage oil connection (8) opens in the annular chamber region (35) of greater radial dimension.

17. Hydrostatic machine according to any preceding claim,
characterised in that,
a guide vane arrangement (52) is associated with the pump device (50).

18. Hydrostatic machine according to any preceding claim,
characterised in that,
in the installed condition of the hydrostatic machine the leakage oil connection (8) is arranged in the upper vertex region of the machine housing (1).

## Revendications

1. Machine hydrostatique, en particulier machine à piston axial, comportant un carter de machine, dont le volume intérieur de carter loge un mécanisme moteur monté tournant et comprend une chambre d'huile de fuite débouchant vers l'extérieur par au moins un raccord d'huile de fuite, laquelle chambre contient de l'huile de fuite, y compris de l'huile de lubrification, qui s'écoule de points d'appui de la machine hydrostatique, et un dispositif à pompe, placé solidaire en rotation sur le mécanisme moteur, qui pompe l'huile de fuite vers l'extérieur à travers le raccord d'huile de fuite, un niveau d'huile de fuite déterminé s'établissant dans la partie inférieure de la chambre d'huile de fuite, caractérisée par une délimitation (32) annulaire, qui partage une zone d'aspiration axiale du dispositif à pompe (29 ; 50 ; 60) dans la partie intérieure de la chambre d'huile de fuite (28), est fixée sur le carter de machine (1) et se termine à distance de celui-ci avec un bord libre, qui sert de trop-plein pour l'huile de fuite, de la chambre d'huile de fuite (28) vers la zone d'aspiration et détermine le niveau (N) de l'huile de fuite dans la chambre d'huile de fuite (28), niveau (N) auquel il ne se produit au moins aucune perte par barbotage dépassant les pertes mécaniques de la machine hydrostatique par suite de la rotation du mécanisme moteur (3, 4, 7) dans l'huile de fuite.

2. Machine hydrostatique selon la revendication 1, caractérisée en ce que le niveau (N) se trouve au-dessous du mécanisme moteur (3, 4, 7).

3. Machine hydrostatique selon la revendication 1 ou 2, caractérisée en ce que le dispositif à pompe comprend une pompe d'écoulement (29 ; 50 ; 60).

4. Machine hydrostatique selon la revendication 3, caractérisée en ce que le dispositif à pompe comprend une pompe centrifuge (29 ; 50 ; 60).

5. Machine hydrostatique selon la revendication 3 ou 4, caractérisée en ce que le dispositif à pompe comprend une roue à pales (29 ; 50).

6. Machine hydrostatique selon la revendication 5, caractérisée en ce que le dispositif à pompe (29) comprend des pales (36) placées solidaires en rotation sur le pourtour extérieur du mécanisme moteur (3, 4, 7).

7. Machine hydrostatique selon la revendication 5 ou 6, caractérisée en ce que le dispositif à pompe (50) comprend des pales (50) placées solidaires en rotation sur un côté frontal du mécanisme moteur (3, 4, 7).

8. Machine hydrostatique selon l'une au moins des revendications précédentes, caractérisée en ce que le dispositif à pompe comprend une pompe à friction (60) avec au moins une surface de pompe (60) tournant avec le mécanisme moteur (3, 4, 7), dont l'effet de pompage repose sur l'entraînement de la couche de friction, adhérant à celle-ci, de l'huile de fuite à pomper, et en ce que le raccord d'huile de fuite (38) est formé dans la zone de la surface de pompe (60).

9. Machine hydrostatique selon la revendication 8, caractérisée en ce que la surface de pompe est une surface de pompe cylindrique formée sur le mécanisme moteur (3, 4, 7).

10. Machine hydrostatique selon la revendication 8, caractérisée en ce que la surface de pompe est une surface de pompe (60) plane s'étendant dans un plan radial perpendiculaire au mécanisme moteur (3, 4, 7).

11. Machine hydrostatique selon la revendication 10, caractérisée en ce que la surface de pompe (60) plane est formée sur un côté frontal libre du mécanisme moteur (3, 4, 7).

12. Machine hydrostatique selon la revendication 11, qui est configurée en machine à axe oblique avec un disque moteur caractérisée en ce que la surface de pompe (60) plane est formée sur un côté frontal libre du disque moteur (7).

13. Machine hydrostatique selon la revendication 12, caractérisée en ce que le raccord d'huile de fuite (38) est formé à distance axiale de la surface de pompe (60) plane, dans la zone recouverte par le disque moteur (7).

14. Machine hydrostatique selon l'une au moins des revendications 8 à 13, caractérisée en ce que chaque surface de pompe (60) est structurée, par exemple rendue rugueuse.

15. Machine hydrostatique selon l'une au moins des revendications précédentes, caractérisée en ce que la délimitation (32) est configurée en écran annulaire et est l'une des deux délimitations (10, 11 ; 32) annulaires s'étendant sensiblement radialement, qui sont placées de part et d'autre du dispositif à pompe (29 ; 50 ; 60) et qui forment un carter de pompe (10, 11 ; 32, 34) conjointement avec la position du carter de machine (1) se trouvant entre elles.

16. Machine hydrostatique selon l'une au moins des revendications précédentes, caractérisée en ce que le dispositif à pompe (29 ; 50) est placé excentré par rapport au carter de machine (1) en formant un espace annulaire (35) en forme de croissant en coupe radiale, et en ce que le raccord d'huile de fuite (8) débouche dans la zone d'espace annulaire (35) de plus grande dimension radiale.

17. Machine hydrostatique selon l'une au moins des revendications précédentes, caractérisée en ce qu'au dispositif à pompe (50) est associé un dispositif à pales de guidage (52).

18. Machine hydrostatique selon l'une au moins des revendications précédentes, caractérisée en ce que le raccord d'huile de fuite (8), à l'état monté de la machine hydrostatique, est placé dans la zone supérieure de sommet du carter de machine (1).
